Europäisches Patentamt

European Patent Office

Office européen des brevets

(19)

(11) Numéro de publication: **0 004 237**
A1

(12)

# DEMANDE DE BREVET EUROPEEN

(21) Numéro de dépôt: **79400140.4**

(51) Int. Cl.²: **C 08 J 5/22**

(22) Date de dépôt: **06.03.79**

(30) Priorité: **14.03.78 FR 7808066**
**13.12.78 FR 7835034**

(43) Date de publication de la demande:
**19.09.79 Bulletin 79/19**

(84) Etats contractants désignés:
**BE CH DE GB IT LU NL SE**

(71) Demandeur: **RHONE-POULENC INDUSTRIES**
**22, avenue Montaigne**
**F-75008 Paris(FR)**

(72) Inventeur: **Bachot, Jean**
**11bis, rue Rémy Laurent**
**F-92260 Fontenay/aux/Roses(FR)**

(72) Inventeur: **Quentin, Jean-Pierre**
**35, rue Joliot Cuire**
**F-69005 Lyon(FR)**

(72) Inventeur: **Bourgeois, Jean-Luc**
**4, rue du Général Eisenhower**
**F-69160 Tassin la Demi-Lune(FR)**

(74) Mandataire: **Champ, Roger et al,**
**RHONE POULENC Service Brevets Chimie et Polymères**
**B.P. 753**
**F-75360 Paris Cedex 08(FR)**

(54) **Membranes échangeuses d'ions; leur préparation; leur utilisation dans l'électrolyse du chlorure de sodium.**

(57) L'invention concerne des membranes pour l'électrolyse.
Elle porte sur des membranes constituées d'une feuille en polymère fluoré et amiante imprégnée d'un copolymère d'acide acrylique et de monomère non ionique.
Application à l'électrolyse de NaCl pour la préparation du chlore et de la soude.

EP 0 004 237 A1

Croydon Printing Company Ltd.

TITRE MODIFIÉ
voir page de garde

1

## MEMBRANES

La présente invention concerne des membranes à propriétés échangeuses d'ions ainsi que leur procédé de préparation et leur utilisation en électrolyse.

Toutes sortes de membranes ioniques ou non ioniques ont été
proposées depuis de nombreuses années à titre de diaphragme séparateur en électrolyse, électrodialyse et autres applications faisant
intervenir des cellules électriques à électrodes.

Parmi les diverses applications envisagées, l'une d'entre elle
revêt une grande importance : c'est l'électrolyse des solutions aqueuses salines, notamment de chlorure de sodium (NaCl) pour la production de chlore et de soude. L'importance de ces procédés provient
de ce que les besoins de l'industrie en chlore et en soude sont
grands en sorte que les unités d'électrolyse de NaCl sont nécessairement grandes ; de plus, vu les quantités fabriquées, les moindres
gains en rendement chimique, électrique ou énergétique sont hautement recherchés. Toutefois la réalisation et l'amélioration des membranes d'électrolyse de NaCl sont un problème très difficile car la
présence simultanée de chlore et de fortes concentrations de soude à
chaud constituent des conditions de corrosivité auxquelles peu de
membranes sont capables de résister.

Outre les propriétés de résistance à la corrosion dont il vient
d'être parlé, il est avantageux d'utiliser des membranes cation-sélectives (c'est-à-dire échangeuses de cations) car celles-ci permettent d'obtenir de la soude moins souillée en chlorure et, potentiellement, des rendements électriques meilleurs.

Lorsque les membranes utilisées sont ion-sélectives, il est en
général plus difficile d'obtenir qu'elles résistent à la corrosion
que quand il s'agit de membranes non ioniques.

0004237

2

Il a maintenant été trouvé des membranes à bonnes performances en électrolyse, caractérisées en ce qu'elles sont constituées d'une feuille de polyfluorooléfine et de fibres d'amiante imprégnée d'un copolymère d'acide acrylique et/ou méthacrylique et d'au moins un autre monomère non ionique et pourvu d'un groupement $>C = CH_2$.

La feuille de polyfluorooléfine et de fibres d'amiante peut être microporeuse, les pores de cette feuille étant obstrués par les copolymères définis ci-dessus.

La polyfluorooléfine est un polymère tel que les homo- et copolymères du tétrafluoroéthylène et du perfluoropropylène, ce peut être également un copolymère éthylène tétrafluoréthylène ; de préférence, on utilise le polytétrafluoro-éthylène.

Les fibres d'amiante ont généralement une longueur comprise entre 0,5 mm et 5 cm, de préférence entre 1 mm et 3 cm.

Comme fibres d'amiante utilisables on peut citer les fibres de type crocidolite, anthophyllite, amosite, tremolite ou actinolite ; toutefois les fibres de type chrysotile sont préférées.

La proportion pondérale relative de polyfluorooléfine par rapport aux fibres d'amiante est généralement comprise entre 0,1 et 5, de préférence entre 0,2 et 3,5.

La proportion pondérale (exprimée en pourcentage) de l'ensemble (polyfluorooléfine + amiante) par rapport à l'ensemble de la mem-brane est compriseentre 20 et 60 %, de préférence entre 25 et 40 %.

Les monomères non ioniques pourvus d'un groupement $>C = CH_2$ associés à l'acide acrylique ou méthacrylique sont généralement mono- ou oligo-insaturés. Comme composés plus particulièrement utilisables, on peut citer parmi les hydrocarbures éthyléniquement mono insaturés : le styrène, l'o-, m- et p-méthylstyrène ou éthylstyrène ; l'o- et p-fluorostyrène ; l'$\alpha$-méthylstyrène ; parmi les hydrocarbures éthyléniquement oligo-insaturés on peut citer : le paradivinylbenzène et le trivinyl-1,3,4 cyclohexane.

On peut, et préfère, utiliser à la fois un monomère non ionique éthyléniquement mono-insaturé et un monomère non ionique éthyléniquement oligo-insaturé, la proportion numérique de ces deux types de monomères étant alors comprise entre 0,1 et 10, de préférence entre 0,4 et 2,5.

La proportion relative pondérale d'acides acrylique ou méthacrylique polymérisés par rapport à l'ensemble des monomères (polymérisés) acrylique et non ionique (hydrocarbure insaturé) est généralement comprise entre 10 et 80 %, de préférence entre 30 et 70 %.

Evidemment, lors de l'utilisation ou préalablement à cette utilisation des membranes selon l'invention, les groupes carboxyliques
issus des monomères acryliques peuvent être salifiés, notamment
par substitution de l'atome d'hydrogène par des ions alcalins. Il
devra être entendu dans toute la présente invention que les groupes
acides des membranes peuvent donc être salifiés.

Les pores qui sont obstrués par le copolymère acrylique ont un
diamètre généralement compris entre 0,05 $\mu$ et 20 $\mu$ et de préférence
entre 0,1 et 12 $\mu$ ; le diamètre moyen (ou diamètre des pores correspondant à un maximum du nombre des pores ayant ce diamètre) est
généralement compris entre 0,2 et 6 $\mu$.

La préparation des membranes selon l'invention peut se faire,
selon un premier mode de réalisation du procédé, généralement par
copolymérisation de l'acide acrylique ou méthacrylique avec le monomère non ionique directement dans les pores d'une feuille ou diaphragme microporeux à base de polyfluorooléfine et d'amiante.

Pour ce faire, on réalise premièrement un diaphragme microporeux
à base de polyfluorooléfine et d'amiante. De tels diaphragmes sont
connus, en particulier par les brevets français 2 229 739 et
2 280 609 dont la substance est incorporée ici par référence. Il
peut s'agir soit de diaphragme isolé, soit de diaphragme déposé sur
une électrode, l'électrode étant par exemple de structure grillagée
et de forme type doigt de gant.

Les agents porogènes utilisables, le cas échéant, dans l'invention sont des agents de type minéral éliminables par tout moyen
connu en soi. On peut ainsi utiliser des sels minéraux solubles
dans l'eau qu'on élimine ultérieurement par lixiviation. On peut
aussi utiliser des sels décomposables, par exemple chimiquement,
comme les carbonates. On préfère utiliser des sels éliminables par
décomposition plutôt que par lixiviation car on peut mieux contrôler l'élimination.

Comme agents porogènes, on peut citer : les sels alcalins ou
alcalino terreux, notamment les halogénures, sulfates, sulfites,
bisulfites, phosphates, carbonates, bicarbonates.

La quantité et la granulométrie de ces agents porogènes sont
choisies de façon que, par élimination de l'agent porogène, la feuille de polyfluorooléfine et de fibres d'amiante, reste souple et manipulable et ait une porosité correspondant aux valeurs indiquées ci-avant.

Pour mettre en oeuvre le procédé de l'invention, on doit donc commencer par réaliser (ou obtenir) une feuille comprenant au moins une polyfluorooléfine, des fibres d'amiante et, éventuellement un agent porogène minéral. Il peut s'agir soit de feuilles isolées, soit de feuilles déposées sur un support tel qu'une électrode, cette électrode étant par exemple de structure grillagée et de forme type doigt de gant. La feuille elle-même peut être réalisée de toute manière connue, par exemple par mélange à sec des constituants puis pressage ou frittage ; on peut aussi réaliser la feuille par filtration suivie d'un séchage d'une suspension comprenant au moins une polyfluorooléfine, des fibres d'amiante et, éventuellement un agent porogène minéral ; le séchage peut également être suivi d'un pressage ou frittage.

On immerge ensuite cette feuille formant diaphragme dans un bain d'imprégnation constitué par un liquide ou une solution contenant de l'acide acrylique et/ou méthacrylique et un ou plusieurs monomères non ioniques ; cette immersion est poursuivie de manière à bien imprégner le diaphragme à l'aide du bain mais il doit bien être entendu que les caractéristiques du diaphragme microporeux, la nature et les proportions des autres monomères et le temps d'immersion sont choisis en parfait accord avec ce qui a été défini ci-avant pour les membranes selon l'invention.

Le traitement d'imprégnation du film par le bain d'imprégnation peut être une immersion vraie, le film étant plongé dans le bain et les deux faces du bain étant en contact avec le bain d'imprégnation, mais il est aussi possible de ne traiter qu'une face du film par le bain d'imprégnation ; l'imprégnation se fait alors également dans toute l'épaisseur de la membrane, mais ce traitement d'imprégnation par une seule face permet de mieux éviter l'inclusion d'air dans la membrane.

Lorsque le diaphragme microporeux est imprégné du bain défini ci-avant, il en est retiré et les monomères acrylique ou méthacrylique et non ionique(s) sont alors polymérisés par tout moyen connu en soi. Selon un mode préféré, la solution d'imprégnation du diaphragme microporeux contient un initiateur de polymérisation, de préférence un générateur de radicaux libres tel que les péroxydes (par exemple de benzoyle, de lauroyle, de tertiobutyle ou de cumyle) ou l'azobis-isobutyronitrile. A chaud, dans des conditions connues, ces initiateurs font copolymériser les monomères insaturés, ce qui conduit à des membranes selon l'invention.

Comme solvants des monomères acrylique et non ionique on préfère utiliser un solvant qui ait également une activité gonflante vis-à-vis d'un copolymère d'acide acrylique et de monomère ionique. Comme solvants utilisables, on peut citer : le dioxanne, le diméthylfor-mamide, le diméthylacétamide, le diméthylsulfoxyde, le chlorure de méthylène.

Lorsque les monomères sont liquides et miscibles entre eux, il peut être inutile d'utiliser un solvant.

La quantité d'initiateur est le plus souvent comprise entre 0,1 et 20 % en poids par rapport à l'acide acrylique.

La concentration de la solution de monomère est généralement supérieure à 50 %, de préférence supérieure à 70 %.

La température de polymérisation est choisie en fonction de la température de décomposition de l'initiateur. Cette température s'obtient par chauffage du diaphragme imprégné de monomère acrylique. Le chauffage peut être effectué par immersion dans un liquide chaud. L'utilisation de solutions salines permet de mieux limiter une éventuelle élimination du monomère acrylique dans le bain de chauffage.

La polymérisation est avantageusement poursuivie jusqu'à disparition très avancée, de préférence totale, des monomères.

Le cycle des opérations d'imprégnation et polymérisation peut être répété plusieurs fois.

Selon les cas avant imprégnation par les monomères ou après polymérisation, on procède, le cas échéant, à l'élimination de l'agent porogène. Le mode d'élimination de cet agent porogène dépend de sa nature. Les principaux modes d'élimination sont, comme cela a déjà été dit, la lixiviation ("leaching out" en anglais) et la décomposition, notamment la décomposition chimique, ce dernier mode étant le mode préféré. Le traitement s'opère de préférence par mise en contact de la feuille précédemment obtenue avec un bain d'élimination de l'agent porogène. Ce bain est de préférence aqueux. La mise en contact de la membrane avec le bain d'élimination peut être soit une immersion vraie soit une mise en contact avec une seule face de la membrane ; mais d'une manière ou de l'autre, la nature du bain d'élimination et la durée du traitement d'élimination sont choisis de manière à éliminer au moins 95 % (en poids), de préférence 100 %, de l'agent porogène.

D'une manière générale, on préfère utiliser des conditions d'élimination douces, c'est-à-dire où l'agent porogène s'élimine lentement afin de ne pas risquer de nuire à la membrane. Une durée d'élimination supérieure à 5 heures est préférée. Lorsqu'il s'agit d'une élimination de sels décomposables en milieu acide, on préfère utiliser, comme bain de décomposition, une solution aqueuse d'acide faible. Comme exemple d'acides faibles on peut citer les acides carboxyliques et plus spécialement les acides alcanoïques solubles dans l'eau.

Après les différentes opérations précédemment décrites, les membranes obtenues sont généralement lavées à l'eau et/ou conditionnées par immersion dans des bains aqueux, dont la nature se rapproche plus ou moins des conditions d'utilisation.

Les membranes préparées selon le procédé de l'invention peuvent adopter les formes les plus diverses, les formes les plus courantes étant les formes planes, cylindriques ou en "doigt de gant" (cylindre fermé à l'une de ses extrémités). Elles sont particulièrement utilisables pour l'utilisation dans l'électrolyse du chlorure de sodium en vue de la fabrication du chlore.

Une variante de réalisation du procédé selon la présente invention est caractérisée en ce qu'une feuille de faible porosité comprenant une polyfluorooléfine et des fibres d'amiante est imprégnée d'une solution comprenant de l'acide acrylique et/ou méthacrylique et au moins un autre monomère non ionique et pourvu d'au moins un groupement $\geqslant C = CH_2$, puis que l'on retire cette feuille de son contact avec ce bain d'imprégnation et que l'on procède à la polymérisation des monomères imprégnés dans cette feuille. Selon cette variante, la feuille de départ, comprenant la polyfluorooléfine et les fibres d'amiante, présente une certaine microporosité réduite ou des cavités de formes diverses sans qu'il ait été nécessaire d'utiliser ou incorporer un agent porogène.

Selon une autre variante de réalisation du procédé de l'invention, une feuille comprenant une polyfluorooléfine, des fibres d'amiante et un agent porogène minéral est imprégnée d'une solution comprenant de l'acide acrylique et/ou méthacrylique et au moins un autre monomère non ionique et pourvu d'au moins un groupement $>CH = CH_2$, puis l'on retire cette feuille de son contact avec ce bain d'imprégnation, l'on procède à la polymérisation des monomères imprégnés dans la feuille et l'on élimine ensuite l'agent porogène minéral.

Il apparait que comme dans le premier mode de réalisation du procédé de l'invention, on obtient, par ces variantes du procédé de l'invention, des membranes constituées d'une feuille dont les pores sont remplis de la résine ionique ou obstrués par celle-ci. Une telle structure peut être obtenue par le procédé de l'invention d'une part, parce que la feuille de départ, avec ou sans agent porogène, est déjà quelque peu microporeux et d'autre part, parce que, même lorsque des pores sont formés par élimination de l'agent porogène après polymérisation de la résine acrylique, cette dernière est capable de remplir ces pores par gonflement. Un avantage du procédé de l'invention est de permettre de réduire les tensions internes aux membranes dues à ce gonflement, ces tensions internes étant susceptibles de produire un fendillement.

La feuille de départ, à base de polyfluorooléfine et de fibres d'amiante, et éventuellement d'agent porogène minéral, comporte généralement une certaine microporosité, même sans avoir subi de traitement spécial destiné à engendrer des pores ; on pense que cette microporosité est accentuée par l'hétérogénéité des constituants de la feuille de départ. Il peut arriver que même des films apparemment denses, tels que ceux ayant subi une lamination, présentent malgré tout une certaine microporosité.

Ces interprètations des phénomènes qui se produisent lors de l'imprégnation de la feuille de résine fluorée et d'amiante par les comonomères, lors de leur polymérisation ou après celle-ci sont données pour faciliter la compréhension de l'invention mais ne peuvent en restreindre la portée.

Les membranes selon l'invention peuvent adopter les formes les plus diverses, les formes les plus courantes étant les formes planes, cylindriques ou en "doigt de gant" (cylindre fermé à l'une de ses extrémités).

Dans ces exemples les membranes ont été caractérisées par les propriétés suivantes :

- Perméabilité aux ions OH⁻ Elle est mesurée de la façon suivante :

- Dans une cellule à deux compartiments séparés par la membrane à examiner et contenant l'un de la soude aqueuse 5N, l'autre une solution aqueuse de NaCl 5N, on suit l'augmentation dans le temps de la concentration en ions $OH^-$ dans le compartiment NaCl ; on déduit la perméabilité

$$P_{OH^-} = \frac{V(c_{t + \Delta t} - c_t)}{S.2,3 \, \Delta \bar{c} \, \Delta t}$$

dans laquelle

$$\Delta \bar{c} = \frac{\Delta c_t - \Delta c_{t + \Delta t}}{\log_{10} \Delta C - \log_{10} \Delta c_{t + \Delta t}}$$

$\Delta c_t$ différence de concentration en ions $OH^-$ entre les deux compartiments au temps t

$\Delta t$ intervalle de temps considéré

$V$ volume de chaque compartiment

$S$ surface membranaire

Cette détermination peut être faite à différentes températures (25 ou 80° C).

- Résistance électrique de substitution (Rs) : on appelle Rs pour une surface de membrane donnée la variation de résistance électrique d'une veine liquide, lorsqu'on substitue la membrane à une tranche de liquide de même épaisseur et de même surface que la membrane, en position perpendiculaire à l'axe de la veine.

Dans le cas présent cette résistance de substitution est mesurée dans une solution aqueuse de NaOH 10N, elle s'exprime en Ohm.cm2. La membrane est conditionnée dans ce même milieu pendant 24 heures avant la mesure.

EXEMPLES 1 A 8 :

A) Préparation du diaphragme poreux : 40 parties d'amiante (sous forme de fibres de type chrysotile d'une longueur comprise entre 0,5 et 5 mm, et de diamètre moyen 0,018 $\mu$) et du carbonate de calcium de granulométrie comprise entre 15 et 20 $\mu$ (1 000 parties de $CaCO_3$ dans la variante $\alpha$ ; 500 parties seulement dans la variante $\beta$) sont mélangées sous agitation (1 800 t/mn) pendant 10 mn. La température est maintenue à 60° C par refroidissement à l'eau. On ajoute 166,6 parties d'une émulsion de polytétrafluoroéthylène (60 % d'extrait sec) et 130 g de nonyldodecylsulfonate de sodium

(solution à 62 g/l), le mélange est agité pendant 5 mn (45 t/mn) puis mis en feuilles (de 1 mm d'épaisseur pour les variantes $\alpha$ - 1 et $\beta$ - 1 et de 2 mm d'épaisseur pour la variante $\beta$ - 2), par 5 passages successifs entre des cylindres maintenus à 50° C et dont l'entrefer est progressivement diminué de 3 à 0,2 mm. Le séchage est effectué à 90° C pendant 15 heures et le frittage à 350° C pendant 12 mn. Les diaphragmes sont ensuite découpés au format de 20 x 20 (cm) et immergés dans une solution d'acide acétique (concentration 20 % en poids) à 25° C pendant 72 heures à pression atmosphérique puis 24 heures sous 100 mmHg (le vide est "cassé" toutes les heures et rétabli immédiatement) ; on renouvelle la solution d'acide acétique quand le pH atteint 4,5. Après lavage à l'eau les diaphragmes sont stockés dans l'eau à température ambiante.

Les diaphragmes préparés selon la variante $\alpha$ ont une taille moyenne de pore allant de 2,5 à 5 $\mu$ les pores étant répartis entre 0,07 $\mu$ et 12 $\mu$ (mesures effectuées par porosimètre à mercure).

Les diaphragmes préparés selon la variante $\beta$ - 1 ont une taille moyenne de pore égale à 4 $\mu$, ces pores étant répartis entre 0,07 $\mu$ et 12 $\mu$. Pour la variante $\beta$ - 2 la taille moyenne va de 0,6 $\mu$ à 4 $\mu$ et les pores sont répartis entre 0,07 et 12 $\mu$.

B) Incorporation de la résine ionique : le diaphragme préparé sous A est séché à 60° C sous 100 mmHg pendant 15 heures (format 10 x 10 cm) puis immergé dans 50 cm3 du mélange monomères et d'initiateur et de solvant pendant 30 mn sous pression réduite (100 mmHg) ; le vide est cassé toutes les cinq minutes. La membrane est sortie du bain, placée entre deux feuilles de papier filtre pour essorage superficiel puis chauffée pendant une heure à 90° C par immersion dans une solution saturée de sulfate de sodium.

Elle est ensuite placée dans un courant d'eau à 25° C pendant 5 minutes puis dans l'eau à 100° C pendant 30 mn.

Avant les mesures (perméabilité et résistance de substitution) la membrane est conditionnée à 90° C pendant 100 heures dans une solution aqueuse contenant :

200 g/l NaOH

5 g/l $ClO_3Na$

1 g/l ClONa

Le tableau suivant précise, pour chaque exemple, les conditions opératoires et les résultats obtenus.

| EXEMPLE | DIAPHRAGME SELON LA VARIANTE | LIQUIDE D'IMPREGNATION DU DIAPHRAGME POREUX — Le monomère ionique utilisé est l'acide méthacrylique. Les quantités des divers autres constituants sont indiqués en pourcentage pondéral par rapport à cet acide méthacrylique. | | | | PERMEABILITE AUX IONS HYDROXYLE (à multiplier par $10^{-4}$ pour obtenir des cm/mn) | | RESISTANTE DE SUBSTITUTION en ohm. cm2 | |
| | | SOLVANT | | | | à 25° C | à 80° C | à 25° C | à 80° C |
| | | dioxane | éthyl-benzène | divinyl-benzène | péroxyde de benzoyle | | | | |
| 1 | α – 1 | 0 | 20 | 20 | 4 | 2,5 | | 38 | 5,5 |
| 2 | α – 1 | 0 | 20 | 20 | 2 | 3 | | 5,5 | 1,1 |
| 3 | α – 1 | 0 | 30 | 30 | 4 | 1,5 | | 13,5 | 4,5 |
| 4 | β – 1 | 14 | 20 | 20 | 2 | 4,5 | | 6,5 | 1,1 |
| 5 | β – 1 | 0 | 40 | 40 | 4 | 0,7 | 3,1 | 31 | 4,4 |
| 6 | β – 1 | 0 | 40 | 40 | 2 | 0,5 | 1,6 | 31,5 | 7,1 |
| 7 | β – 1 | 0 | 30 | 30 | 4 | 1,3 | | 13 | 3,1 |
| 8 | β – 2 | 0 | 40 | 40 | 4 | | 0,1 | 40 | 13 |

0.0.4237

On a utilisé par ailleurs la membrane des exemples 1 et 8 dans une cellule d'électrolyse de NaCl pendant 1 000 heures. Les conditions d'électrolyse étaient les suivantes : densité de courant : 25 A/dm2 ; température : 81° C ; concentration en NaCl : 3,8 mole/l; concentration en soude : 3 mole/l initialement, 10 mole/l en fin d'électrolyse. Cette membrane a parfaitement enduré ces conditions opératoires.

EXEMPLE 9 (membrane déposée sur cathode grillagée) A - Préparation des diaphragmes microporeux

A$_1$ - Préparation de la suspension

On prépare une suspension de fibres d'amiante contenant :

• 100 g de fibres d'amiante, un tiers étant longues (1 à 3 cm) et deux tiers étant courtes (0,2 à 1 cm)

• 3390 g d'eau

• 1,5 g de dioctylsufosuccinate de sodium en solution à 75 % en poids dans l'alcool éthylique

On agite pendant 45 minutes avec un agitateur tournant à 1 370 tours/mn.

Puis on ajoute :

• 100 g de polytétrafluoroéthylène sous forme de latex (suspension aqueuse) à 60 % en poids d'extrait sec.

• 560 g de carbonate de calcium de granulométrie comprise entre 1 et 10 μ (moyenne 5 μ).

On agite encore pendant 45 minutes, laisse reposer 24 heures puis agite encore 45 minutes comme précédemment.

A$_2$ - Dépôt sur cathode grillagée

On utilise une cathode en acier en forme doigt de gant de hauteur 7 cm et de section 7 cm x 2,2 cm ; cette cathode est constituée d'un grillage de 4 mm d'épaisseur, en fils de 2 à 3 mm de diamètre, ces fils étant tissés et laminés de manière à laisser des ouvertures de mailles de 2,1 mm.

Ce doigt de gant est immergé dans la suspension précédemment préparée sans cependant que la suspension entre dans l'intérieur du doigt de gant. On aspire alors par l'intérieur du doigt de gant en y faisant baisser, progressivement en 6 mn la pression absolue depuis 660 mmHg jusqu'à 160 mmHg. On retire alors la cathode du bain et poursuit l'application du vide (160 mmHg) pendant 20 mn. Puis l'aspiration étant arrêtée, on traite thermiquement pendant 24 heures à 150° C (séchage) puis 10 minutes à 300° C et 6 minutes à 360° C (frittage).

A$_3$ - Préparation finale du diaphragme microporeux

L'ensemble cathodique précédemment préparé est immergé 4 jours dans une solution aqueuse à 20 % en poids d'acide acétique et 0,2 % de phénylthiourée (anticorrosif) ce qui élimine le carbonate de calcium.

Après lavage à l'eau et séchage à l'air à 30° C pendant 48 heures, on obtient une cathode en doigt de gant recouverte d'une couche microporeuse de 2,5 mm d'épaisseur constituée d'un mélange de fibres d'amiante et de polytétrafluoroéthylène.

B - Imprégnation par le mélange acide méthacrylique-divinylbenzène.

L'ensemble cathode-diaphragme précédemment préparé est immergé pendant 1 h dans 0,6 litre d'un mélange de :

• 10 parties d'acide méthacrylique
• 6 parties de divinylbenzène
• 0,4 parties de peroxyde de benzoyle

L'ensemble cathodique-diaphragme est vidé du mélange qui s'y est introduit. On procède alors à la polymérisation de la manière suivante : l'ensemble est plongé (sauf l'intérieur) pendant 1 heure dans une solution aqueuse de Na$_2$SO$_4$ saturée à 90° C. On lave à l'eau et traite encore pendant 30 mn à 100° C dans de l'eau.

C - Utilisation en électrolyse

La membrane déposée sur cathode grillagée est conditionnée dans de la soude 5N puis on place l'ensemble entre deux anodes planes de 0,5 dm2 de surface chacune. Ces anodes sont en titane déployé (plaque de 1 mm d'épaisseur déployée de manière à créer des mailles en forme de losanges de 16 mm x 7 mm) recouvert d'un mélange de platine et d'iridium. La distance cathode-anode est de 5,5 mm.

Le compartiment anodique est alimenté en saumure (solution aqueuse de NaCl) saturée et le compartiment cathodique par de l'eau pure.

On procède à l'électrolyse à 85° C avec une densité de courant de 25 A/dm2.

Lorsque l'équilibre est atteint, la différence de potentiel entre la cathode et une anode est d'environ 4,1 volts, la concentration de soude dans le compartiment cathodique est de 360 g/l, la concentration en chlorure de sodium dans le compartiment anodique est de 260 g/l, la concentration en ions chlorure dans le compartiment cathodique est de environ 400 ppm (parties par million) par rapport à la soude.

Le rendement électrique en soude est de 50 % (ce rendement est aussi appelé efficacité de courant ; un rendement de 100 % est le rendement tel que un Faraday produit 1 mole de soude).

EXEMPLE 10

On prépare une feuille d'amiante et de polytétrafluoréthylène comme dans les exemples 1-8 jusqu'au découpage d'un échantillon. Dans l'exemple présent, cette feuille est ensuite découpée au format de 15 x 15 (cm).

Préparation de la membrane

Dans le but de pouvoir traiter ce film par le bain d'imprégnation seulement sur une seule face, ce film est préalablement fixé contre une pellicule en polyester, un joint silicone assurant l'étanchéité entre les 2 films à leur périphérie. L'ensemble est immergé pendant 30 mn dans 300 cm3 d'un mélange acide méthacrylique/éthylbenzène/divinylbenzène/peroxyde de benzoyle en proportions pondérales respectives 100/20/20/6.

Le film imprégné est alors sorti du bain d'imprégnation ; il est détaché de son support polyester. La teneur en monomères introduits dans la membrane est de 17 % en poids.

On immerge alors ce film imprégné pendant 1 h dans une solution aqueuse saturée en sulfate de sodium à 90° C puis pendant 30 mn dans de l'eau bouillante. On sèche enfin pendant 15 h à l'air à 90° C.

Puis on recommence une deuxième fois cette série d'opérations : fixation contre un support polyester/immersion dans un bain de monomères/polymérisation des monomères par immersion dans des milieux aqueux chauds.

Le film ainsi traité est immergé pendant 5 jours dans une solution aqueuse d'acide acétique à 25 % en poids en mettant chaque jour une solution neuve. Le cinquième jour, le traitement d'immersion s'effectue sous pression absolue réduite à 100 mmHg en remettant sous pression atmosphérique une fois par heure.

La membrane échangeuse d'ion ainsi obtenue est conditionnée avant utilisation pendant 100 heures dans une solution aqueuse conte-

nant 200 g/l de soude (NaOH), 5 g/l de Na ClO$_3$, 1 g/l de NaClO.

Cette membrane présente une résistance de substitution de 2,7 ohm.cm2 et une perméabilité aux ions hydroxyle de 4,5 x 10$^{-4}$ cm/mn.

EXEMPLE 11 à 13

On prépare une suspension de fibres à partir de :

- 100 g d'amiante (1/3 de fibres ayant une longueur comprise entre 1 et 3 cm ; 2/3 de fibres ayant une longueur comprise entre 0,2 et 1 cm).

- 3330 g d'eau

- 1,5 g de dioctylsulfosuccinate de sodium en solution à 75 % en poids dans l'alcool.

On agite de manière à homogénéiser puis on ajoute 30 g de polytétrafluoroéthylène mis sous la forme d'une émulsion à 60 % d'extrait sec.

On poursuit l'agitation de manière à obtenir un mélange bien intime.

On filtre cette émulsion sur une toile d'amiante carrée de 14 cm de côté jusqu'à retenir 23 g de matière sèche sur cette toile filtrante. La matière filtrée est conservée avec son filtre. On sèche l'ensemble 24 h à 150° C, puis 10 mn à 300° C, puis 10 mn à 350° C.

L'épaisseur finale de film microporeux est 2 mm.

Préparation de la membrane

Le film précédemment préparé est immergé dans un mélange acide méthacrylique/divinylbenzène/peroxyde de benzoyle pendant 30 mn à température ambiante et sous vide (pression absolue réduite à 100 mmHg ; on supprime le vide toutes les 5 mn puis le remet en action immédiatement).

La distinction entre les trois exemples 2 à 4 provient des proportions respectives d'acide méthacrylique, de divinylbenzène et de peroxyde de benzoyle. Ces proportions pondérales respectives sont 100/40/4 pour l'exemple 2, 100/40/6 pour l'exemple 3, 100/60/6 pour l'exemple 4.

Le film imprégné est sorti de son bain d'imprégnation, essuyé puis immergé pendant 90 mn dans une solution aqueuse à 90° C saturée en NaCl. On termine par une immersion de 30 mn dans l'eau bouillante.

Les membranes sont ensuite conditionnées par un mélange NaOH/NaClO$_3$/NaClO comme à l'exemple 1 puis elles sont utilisées dans une opération d'électrolyse à 80° C sous 25 A/dm2 (densité de courant électrique). L'anolyte est une solution aqueuse de NaCl (3,7 M) et de NaOH (9N), ces concentrations étant maintenues constantes tout le long de l'électrolyse par les ajouts adéquats.

Le catholyte est initialement une solution aqueuse de NaOH à 3 moles/l ; lorsque la concentration parvient à 9 moles/l elle est maintenue à cette valeur par un apport d'eau et un soutirage adéquats. La membrane de l'exemple 13 a fonctionné 2000 heures sans modification notable des performances.

On donne ci-après les résultats observés à l'équilibre c'est-à-dire quand la concentration en soude de catholyte a atteint la valeur de 9 N.

| EXEMPLE | TENSION EN VOLT ENTRE ELECTRODES | CONCENTRATION EN IONS CHLORURE DANS LE CATHOLYTE EXPRIMEE EN mg/l | RENDEMENT ELECTRIQUE EN % |
|---------|----------------------------------|------------------------------------------------------------------|---------------------------|
| 11      | 4,1                              | 20                                                               | 64                        |
| 12      | 3,95                             | 20                                                               | 60                        |
| 13      | 4,9                              | 10                                                               | 71                        |

A l'exemple 13, le rendement électrique était de 80 % lorsque la concentration en soude dans le catholyte était de 3 N.

## REVENDICATIONS

1. Membranes échangeuses d'ions utilisables notamment pour l'électrolyse de solutions salines, caractérisées en ce qu'elles sont constituées d'une feuille de polyfluorooléfine et de fibres d'amiante imprégnée par un copolymère d'au moins un acide insaturé pris parmi le groupe constitué par les acides acrylique et méthacrylique avec au moins un autre monomère non ionique et pourvu d'au moins un groupement $\rangle C = CH_2$.

2. Membranes selon la revendication 1 caractérisées en ce que la feuille de polyfluorooléfine et de fibres d'amiante est une membrane microporeuse dont le copolymère acrylique obstrue les pores.

3. Membranes selon la revendication 1 ou 2, caractérisées en ce que la fluorooléfine est un homo- ou copolymère du tétrafluoroéthylène et du perfluoropropylène.

4. Membranes selon l'une des revendications 1 à 3, caractérisées en ce que les fibres d'amiante ont une longueur comprise entre 0,5 mm et 5 cm, de préférence entre 1 mm et 2 cm.

5. Membranes selon la revendication 4, caractérisées en ce que les fibres d'amiante sont du type chrysotile.

6. Membranes selon l'une des revendications 1 à 5, caractérisées en ce que le rapport pondéral polyfluorooléfine/fibres d'amiante est compris entre 0,2 et 5, de préférence entre 1 et 3,5.

7. Membranes selon l'une des revendications 1 à 6, caractérisées en ce que la proportion pondérale de l'ensemble polyfluorooléfine + amiante par rapport à l'ensemble de la membrane est comprise entre 20 et 60 %, de préférence entre 25 et 40 %.

8. Membranes selon l'une des revendications 1 à 7, caractérisées en ce que les groupes acides sont salifiés.

9. Membranes selon l'une des revendications 1 à 9, caractérisées en ce que les pores remplis de copolymère d'acide acrylique ont un diamètre compris entre 0,1 et 12 $\mu$, le diamètre moyen étant de préférence compris entre 0,2 et 6 $\mu$.

10. Membranes selon l'une des revendications 1 à 10 caractérisées en ce qu'elles sont déposées sur une cathode en métal grillagé et en forme de doigt de gant.

11. Procédé de préparation d'une membrane échangeuse d'ions, caractérisé en ce qu'une feuille microporeuse à base de fluorooléfine et d'amiante est immergée dans un bain contenant de l'acide acrylique et/ou méthacrylique et un ou plusieurs monomères non ioniques, puis retiré de ce bain puis soumis à des conditions où il se produit la polymérisation des monomères.

12. Procédé selon la revendication 11, caractérisé en ce que le bain d'imprégnation est une solution des monomères comprenant un initiateur de polymérisation de type générateur de radicaux libres, la concentration de cette solution étant éventuellement supérieure à 50 % en poids, de préférence supérieure à 70 %.

13. Procédé de préparation de membranes échangeuses d'ions, utilisables notamment dans le domaine de l'électrolyse, caractérisé en ce qu'une feuille comprenant une polyfluorooléfine et des fibres d'amiante est imprégné d'une solution comprenant de l'acide acrylique et/ou méthacrylique et au moins un autre monomère non ionique pourvu d'au moins un groupement $\diagup C = CH_2$, puis que l'on retire ce film de son contact avec le bain d'imprégnation et que l'on procède à la photopolymérisation des monomères imprégnés dans ce film.

14. Procédé de préparation de membranes échangeuses d'ions caractérisé en ce qu'une feuille comprenant une polyfluorooléfine, des fibres d'amiante et un agent porogène minéral, est imprégné d'une solution comprenant de l'acide acrylique et/ou méthacrylique et au moins un autre monomère non ionique pourvu d'au moins un groupement $\diagup C = CH_2$ puis que l'on retire ce film de son contact avec le bain d'imprégnation, que l'on procède à la polymérisation des monomères imprégnés dans ce film et que l'on élimine ensuite l'agent porogène minéral.

15. Procédé selon l'une des revendications 11 à 14 caractérisé en ce que la polyfluorooléfine est un homo- ou copolymère du tétrafluoroéthylène ou du perfluoropropylène et que le monomère non ionique est du styrène ou de l'o-, m- ou p-méthylstyrène ou éthylstyrène ou de l'o- ou p-fluorostyrène ou de l'$\alpha$-méthylstyrène ou du divinylbenzène.

16. Procédé selon l'une des revendications 11 à 15 caractérisé en ce que, comme monomère non ionique, on utilise à la fois un monomère non ionique éthyléniquement mono insaturé et un monomère non ionique éthyléniquement oligo-insaturé, la proportion numérique de ces deux types de monomères étant comprise entre 0,1 et 10, de préférence entre 0,4 et 3,5.

17. Procédé selon l'une des revendications 11 à 16 caractérisé en ce que la proportion pondérale de l'ensemble polyfluorooléfine + amiante par rapport à l'ensemble de la membrane est compris entre 20 et 60 % et/ou que la proportion pondérale d'acides acrylique et/ou méthacrylique polymérisés par rapport à l'ensemble des monomères (polymérisés) acrylique et non ionique est compris entre 10 et 80 %.

18. Procédé selon la revendication 17 caractérisé en ce que la première proportion mentionnée à la revendication 17 est comprise entre 25 et 40 % et/ou que la seconde proportion mentionnée à la revendication   est comprise entre 30 et 70 %.

19. Utilisation des membranes selon l'une des revendications 1 à 10 dans une cellule d'électrolyse du chlorure de sodium.

0004237

**Office européen des brevets**

## RAPPORT DE RECHERCHE EUROPEENNE

Numéro de la demande

EP 79 40 0140

| | | | |
|---|---|---|---|
| **DOCUMENTS CONSIDERES COMME PERTINENTS** | | | **CLASSEMENT DE LA DEMANDE (Int. Cl.²)** |
| Catégorie | Citation du document avec indication, en cas de besoin, des parties pertinentes | Revendication concernée | |
| | FR - A - 1 441 092 (IONICS INC.)<br>* Page 1, colonne de gauche, alinéa 1; page 2, colonne de gauche, alinéas 1 et 2; page 3, colonne de gauche, lignes 22-30; page 4, exemple 4 *<br><br>-- | 1,2,3,<br>8,11,<br>13,19 | C 08 J 5/22 |
| | CHEMICAL ABSTRACTS, vol. 85, no. 26, 27 décembre 1976, page 480 no. 200134p<br>Columbus, Ohio, USA<br>"Caustic Alkali"<br><br>& JP - A - 76 92798 (ASAHI GLASS CO.)<br>* Totalité du résumé *<br><br>-- | 1,2,9,<br>11,13,<br>15,19 | **DOMAINES TECHNIQUES RECHERCHES (Int. Cl.²)**<br><br>C 08 J 5/22<br>C 25 B 13/08 |
| | US - A - 3 817 772 (A.H. HEIT)<br>* Colonne 4, lignes 1-51; colonne 5, lignes 12-46; colonne 11, lignes 50-67; colonne 12, lignes 18-36 *<br><br>-- | 1,14 | |
| A | GB - A - 1 123 909 (THE PERMUTIT CO.)<br><br>-- | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| A | CH - A - 422 306 (WACKER-CHEMIE)<br><br>---- | | |
| | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 19-06-1979 | KERRES |

OEB Form 1503.1  06.78